# EUROPEAN PATENT SPECIFICATION

(11) **EP 1 450 927 B1**
(45) Date of publication and mention of the grant of the patent: **06.05.2009**
(21) Application number: 02783129.6
(22) Date of filing: 05.12.2002
(51) Int. Cl.: B01D 27/06, B01D 46/52

(54) **A METHOD FOR MANUFACTURING A FILTER, AND A FILTER**
VERFAHREN ZUR HERSTELLUNG EINES FILTERS UND FILTER
FILTRE ET SON PROCEDE DE FABRICATION

(30) Priority: 07.12.2001 FI 20012420
(43) Date of publication of application: 01.09.2004
(73) Proprietor: VALTION TEKNILLINEN TUTKIMUSKESKUS, 02150 Espoo (FI)
(72) Inventor: HEINONEN, Kimmo, FIN-33720 Tampere (FI)
(74) Representative: Pursiainen, Timo Pekka
(86) International application number: PCT/FI2002/000991
(87) International publication number: WO 2003/049836

(56) References cited:
- FR-A- 2 063 849
- GB-A- 1 148 942
- US-A- 4 498 989
- US-A- 5 804 073

## Description

The invention relates to a method in the manufacture of a filter according to the preamble of the appended claim 1. The invention also relates to a filter according to the preamble of the appended claim 4.

In this kind of a filter type, a medium is passed through the filter material and impurities are deposited in the filter material. Typical uses for such a filter structure include filters for gases and liquids, such as air filters and oil filters, which must be replaced at regular intervals. When such a filter is placed, for example, in a ventilation duct, it is possible to remove gaseous or particulate impurities from incoming air supplied into a room, or when such a filter is placed in the liquid circulation of a process, particulate impurities can be removed from the liquid flow.

In filters for filtering particles and gaseous substances, the quantity of the filter material is very significant in view of the use properties of the filter. For the filtering capacity, the surface area of the filter material should be as large as possible. On the other hand, the structure of the filter must normally not take a large space, and the filter must not cause an undue pressure loss by its flow resistance in the system.

It is generally known to increase the filtration capacity of a filter by increasing the contact area between the filter material and the substance to be filtered. In known solutions, the surface area is increased by using plated and baggy arrangements, which are formed by folding a sheet of filter material in one direction and, if necessary, by cutting and joining one or more sheets. For the joining, various seaming methods are generally used, such as sewing, glueing and hot sealing. Furthermore, several filters are formed by using various frame structures made of a support material to give the filter material a desired shape, such as, for example, a baggy or corrugated shape. In this case, however, a problem often lies in the complex manufacturing technique and the high flow resistance caused by the finished filter.

US patent 4,798,575 presents a method and a device for manufacturing a filter, wherein the filter is made by folding the filter material in one direction. The finished filter element consists of the filter, folded of the filter material, and a frame which, seamed together with the filter material, forms the side walls of the filter pockets.

EP patent 0 377 419 B discloses a method for manufacturing a filter, in which the filter material is folded in one direction and the distance between the filter pockets formed of the folds is determined by using a glueing method, in which e.g. the thickness of the glue layer affects the folding density and thereby also the size of the filter pockets. To be functional, the filter made according to the method will require a frame in which the filter is installed, because the filter pockets of the filter do not contain side walls as such.

Japanese application publication JP 62216619 A2 discloses a method for forming a filter of a single sheet of filter material by first folding it in one direction and then compressing the stack, achieved by folding, in its center and by spreading the folded stack at its ends. In this way, the filter pockets are arranged in two V-shapes in different directions. After the folding of the folded stack, the edges of the stack are seamed tightly with a frame. The ready-to-use filter element thus consists of a filter and a frame fixed to it and comprising the side walls of the filter pockets.

The primarily aim of the present invention is to present a novel method for manufacturing a filter, in which the quantity of filter material per filter volume is considerably larger than in conventional arrangements and in which the flow resistance caused by the filter is smaller than in conventional arrangements. To attain this purpose, the method according to the invention is primarily characterized in what will be presented in the characterizing part of the appended claim 1. in the method, by folding the filter material in two directions which are substantially perpendicular to each other, the side walls of the pocket can be simultaneously achieved by the second folding.

Furthermore, the method for manufacturing the filter according to the invention is simple and, for example, the number of seams is substantially smaller than in known arrangements.

The other, dependent claims will present some preferred embodiments of the invention.

The aim of the invention is also to provide a filter, in which a large quantity of filter material is combined with a compact size and a low flow resistance. To attain this purpose, the filter according to the invention is primarily characterized in what will be presented in the characterizing part of the appended claim 4. The filter is formed by folding the filter material in two directions which are substantially perpendicular to each other. A fold made in one direction forms the bottom for the filter, and by preferably more folds than one made in the second direction, the successive portions of the filter pocket can be closed with the filter material on each side without separate seaming.

The other, dependent claims will present some preferred embodiments of the invention.

The basic idea of the invention is to use, in the manufacture of the filter, a method for folding the filter material, wherein the filter material is folded in two directions different from each other, and the parallel folds formed on the outer surface of the folded material are seamed to each other. As a result of the folding and the seaming, a uniform twisty filter pocket is formed of the filter material, its bottom and sides being formed without seams. The number of seamings required in the manufacture of the filter is small, because seams will only be needed at the ends of the filter (at opposite ends of the twisty pocket) and on the front surface, at which locations they are also easy to provide technically. By means of the method, it is possible to increase, in comparison with the structures presently in use, the effective surface area of the filter material in proportion to the volume of the filter, and also the flow resistance caused by the filter is about 30 % lower than the flow resistances caused by filters having a corresponding separating capacity and being presently in use.

The advantages of the invention related to production and use are manifested particularly in the use of thick filter materials.

In the following, the invention will be described in more detail with reference to the appended drawings, in which
- Fig. 1: shows, in a principle view, a filter material sheet folded once in the longitudinal direction,
- Fig. 2: shows, in a principle view, a filter material sheet folded several times in the longitudinal direction,
- Fig. 3: illustrates the folding of a filter material sheet, folded once, in the transverse direction,
- Fig. 4: illustrates the folding of a filter material sheet, folded several times, in the transverse direction,
- Fig. 5: shows, in a principle view, one filter pocket of the filter according to the invention,
- Fig. 6: shows, in a principle view, filter pockets of the filter according to the invention,
- Fig. 7: shows a filter material sheet and seaming material stripes fitted on it,
- Fig. 8: shows, in a principle view, a filter according to the invention, and
- Fig. 9: shows graphically the results of tests made with the filter.

The filter is made of a filter material which can be of any material used for filtering, preferably having a substantially constant thickness, and typically consisting of support layers and adsorbent material layers. The structure and composition of the layers, as well as the number of the layers, is selected according to the medium to be filtered and the impurities to be filtered out. It is advantageous to use a filter material in which the outer surface consists of support layers of a gauzy cloth and whose middle part comprises a layer of a granulous adsorbent placed therebetween, forming a porous adsorbent material layer. For example, it is particularly advantageous to use a filter material in which activated carbon is used as the adsorbent material between two fibre layers acting as support layers. It should be noted that a person skilled in the art will be able to select a suitable filter material to achieve sufficient filtering of impurities.

The folding of the filter material to a filter according to the invention can be added as a continuation of the step of manufacturing the filter material, wherein the filter material is fed from the manufacturing step directly to the folding step. The folding of the filter material can also take place separately from the manufacture of the filter material, wherein the filter material can be fed as a continuous band from a roll or as ready cut sheets into the folding machine. In the examples below, only the term filter material sheet A will be used of the filter material, but it is intended to cover all the forms of the filter material irrespective of whether the material has been cut to a fixed size, and it is thus naturally obvious that the method of the invention can also be used for folding a continuous band-like filter material. Furthermore, it will be obvious that the method of the invention is suitable for both a batch production method and a continuous production method.

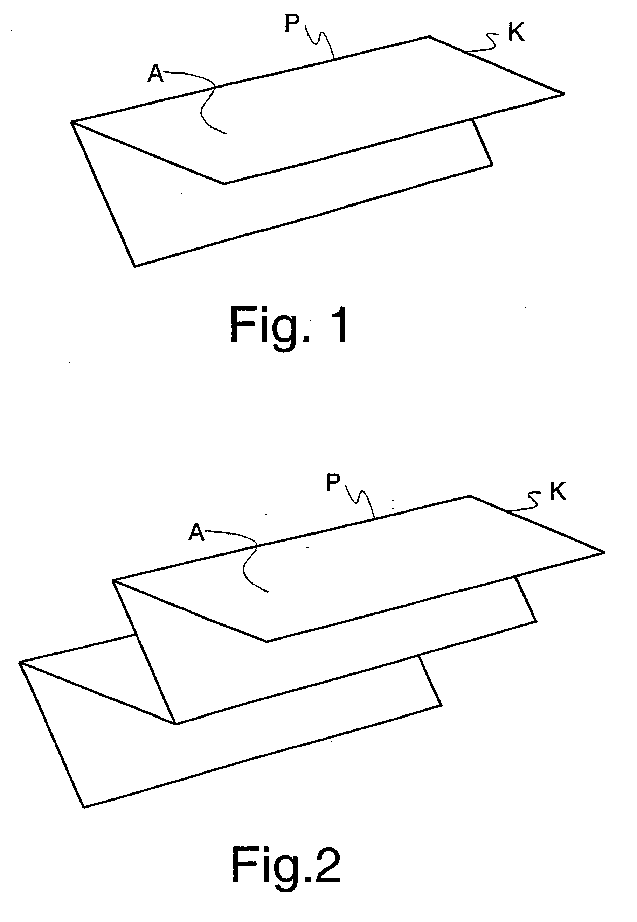

The folding of the filter material sheet A is started by folding the sheet in the longitudinal direction according to the principle shown in Figs. 1 and 2. The size of the filter material sheet A to be used is determined according to the size of the filter to be made, because the length of the face of the folded filter material sheet will determine the length K of the side in the finished filter and thereby the depth of the filter. The fold made by folding will constitute the bottom P of a filter pocket in the finished filter, and its opposite side will be referred to as the front surface hereinbelow. In the finished filter, the travel direction of the medium to be filtered may be from the front surface to the bottom P, or from the bottom to the front surface, depending on the application of the finished filter. The filter material sheet A can be folded once or twice in the first direction, as shown in Fig. 2, wherein there can also be one or more folds forming the bottom P. Figure 2 shows a sheet folded to a W-shape in the first folding direction and having two parallel bottoms P of a filter pocket.

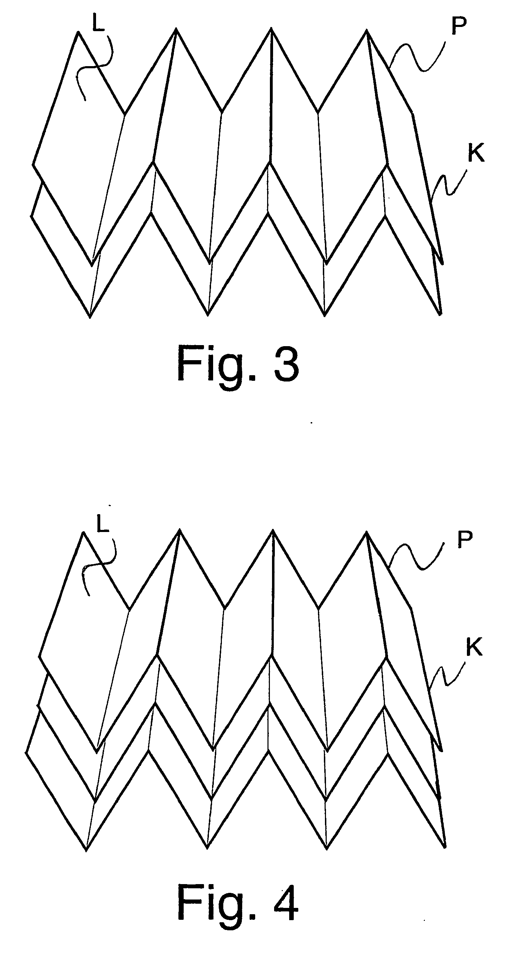

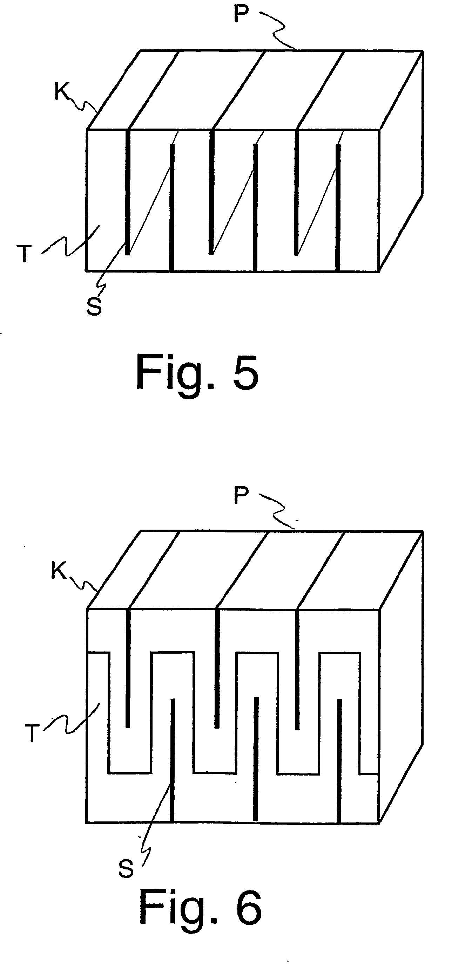

Next, the filter material sheet A folded in one direction is folded in a direction perpendicular to the fold forming the bottom P, that is, in the transverse direction of the sheet, as shown in Figs. 3 and 4, by folding the sheet alternately in opposite directions, wherein the folds L form a zigzag folding of the filter material, in which the direction of successive folds is upwards and downwards in an alternating manner. Thus, the bottom P is also formed in a way corresponding to the folds L, *i.e.* in the zigzag shape, forming the twisty bottom of the uniform filter pocket. The number of folds L depends on the size of the filter material sheet A and the distance between adjacent folds, and it is obvious that the method of the invention does not limit the number of folds but there may be one or more folds. The successive portions of the uniform filter pockets, which follow each other in the way determined by the folds L, are limited by the filter material in the side direction, without seams. All the opposite folds L of the sheet outside the pocket are joined to each other tightly by a suitable seaming method, such as glueing, taping, sewing, stapling, battening, or hot sealing, wherein the seams S, which are shown in Figs. 5 and 6, are exposed at the front surface of the finished filter. Also, the ends of the finished filter material sheet are seamed by a method corresponding to the seams of the front surface. Thus, the filter material becomes a uniform, twisty filter pocket T with a large surface area (Fig. 5). When the filter material sheet A is folded more than once in the first step, several separate, parallel filter pockets T are formed in the filter (Fig. 6), one at each bottom P formed by the first folding. Naturally, the uniform pockets T formed in the filter can be closed at necessary points without deviating from the basic idea of the invention, for example for reasons of the manufacturing technique or when the filter is formed of several folded parts complying with the invention. The seaming method and the seaming material are selected according to the filter material and the substance to be filtered, and it is obvious that the seaming method can be different from that presented in the example, or a combination of several seaming methods. The number of seams needed to form the filter according to the invention is about 70 to 80 % smaller than in known baggy filter structures.

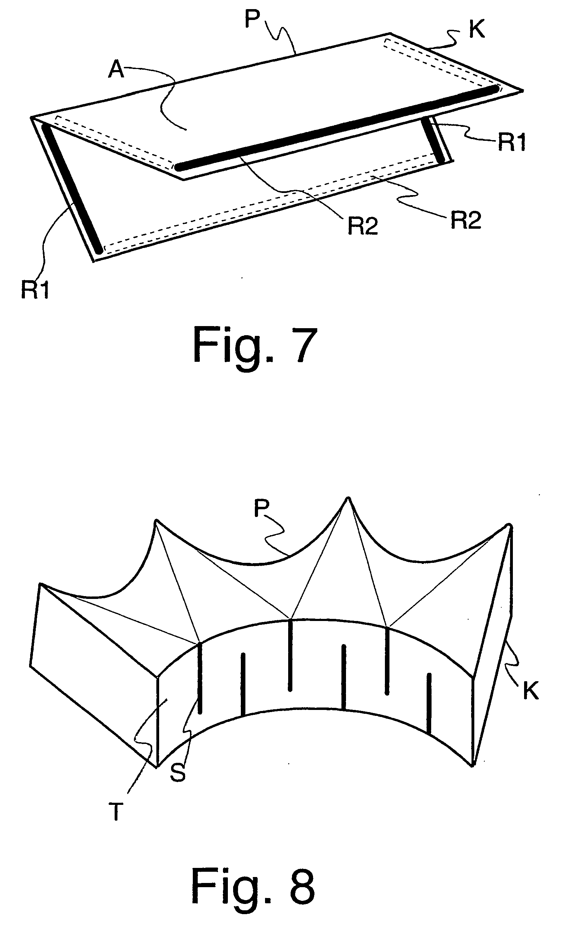

In an advantageous embodiment of the invention, the filter material sheet A is provided with seaming material stripes R1 and R2 at points shown in Fig. 7 before the sheet is folded. The seaming material stripes R1 at the ends and the seaming material stripes R2 at the edges of the sheet are on opposite sides of the filter material sheet A. When the filter material sheet A is folded in the first direction, the seaming material stripes R2 come outside the folded sheet, that is, outside the pocket formed by the first folding, and the stripes R1 come inside the sheet, that is, inside the pocket, respectively. The seaming material stripes R1 at the ends of the filter material sheet A are used to form the ends of the filter pocket T. When the filter material sheet A is folded in the second direction (*e.g.* in a zigzag shape), the seaming material stripes R2 at the sides of the sheet come in opposite folds L to be joined together, and the seaming material stripes are used to form the seams S on the front surface of the filter.

The filter achieved by the method according to the invention is normally fixed in a frame designed according to the use, wherein the filter element thus formed may be, for example, rectangular, annular, cartridge-like, star-like, or curved, as shown in Fig. 8. It should be noted that the invention is not limited to the shape of the filter element, but the shape of the filter element will vary according to the application. Furthermore, depending on the application and the use of the filter, the filter can, in some cases, be used without a frame.

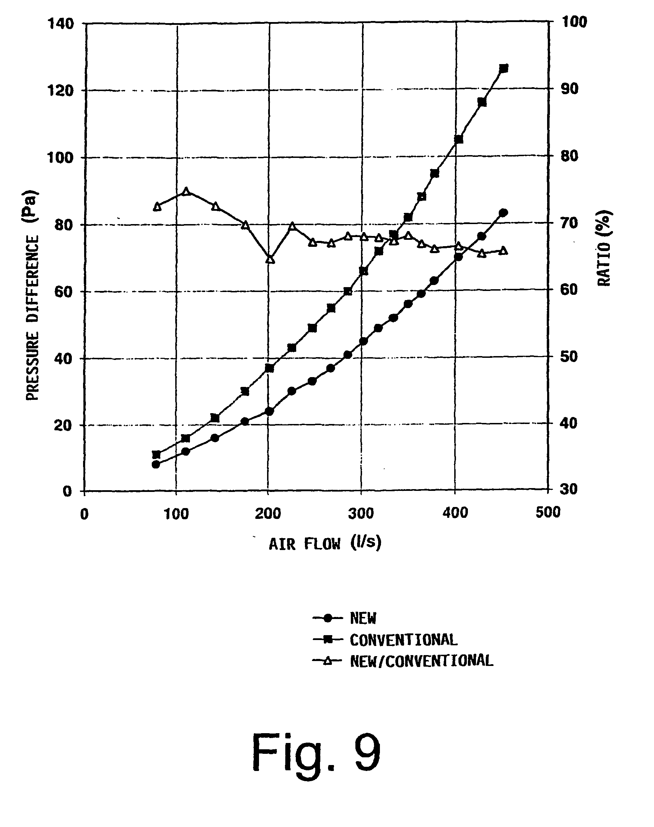

The results of Fig. 9 were obtained for a filter according to the invention and for a conventional filter formed of several bags, by measurements of pressure difference in an air flow. Both of the measured filter models had the same outer dimensions, i.e. their width was 0.3 m, height 0.36 m and depth 0.6 m, and the surface area of the filter material used in both filter models was 7.8 m², and the weight of the filters was 3.57 kg. Figure 9 shows that the pressure difference caused by the filter of the invention (NEW) was 8-83 Pa, at an air flow rate of 78-4501/s, and the pressure difference caused by a conventional filter (CONVENTIONAL) was 11-126 Pa. The graph NEW/CONVENTIONAL illustrates the ratio between pressure differences caused by the filters, and as can be seen from the graph, when folded according to the invention, the same area of filter material causes, in the air flow, a pressure difference which is about 25 to 35 % smaller than one caused by a conventional filter made of several bags, and the mutual difference in the flow resistances of the filters is manifested with an increase in the flow rate. The reduction in the flow resistance to such a great extent is a significant advantage in the use of the filter according to the invention.

Naturally, it will be obvious that the invention is not limited solely to the embodiment presented in the above example, but, for example, the shape of the filter material sheet may be different from that presented in the example. Also, the number and material of the support layers and the adsorbent material layers in the filter material may differ from those presented in the example, depending on the substance to be filtered. Furthermore, the formation of the filter may differ from that presented in the example in that some steps of manufacture may be taken in a different order and some steps may be taken simultaneously.

## Claims

1. A method for manufacturing a filter to be used particularly for liquid or gaseous media, which filter is produced by folding a filter material sheet (A) in two directions which are substantially perpendicular to each other, comprising the steps:
- folding the filter material sheet (A) in a first direction for constituting the bottom (P) of a filter pocket (T);
- folding the folded filter material sheet (A) alternately in opposite directions so that the generated folds (L) form a zigzag shape, wherein said opposite directions are perpendicular to said first direction;
- joining the opposite folds (L) outside the pocket (T) of the formed zigzag shaped filter material sheet (A) to each other tightly by a seaming method so that the formed seams (S) are exposed on the front surface of the finished filter, wherein said front surface is at the opposite side of the bottom (P);
- seaming the lateral ends of the folded filter material sheet, thus forming a substantially uniform, twisty filter pocket (T).

2. The method according to claim 1, **characterized in that** the seaming is carried out by at least one of the following methods: glueing, taping, sewing, stapling, battening, hot sealing.

3. The method according to claim 1, **characterized in that** the seaming material (R1, R2) is placed in the filter material before the folding.

4. A filter for liquid or gaseous media, which is formed by folding a filter material in two directions which are substantially perpendicular to each other in such a way that:
- the filter material sheet (A) is folded in a first direction for constituting the bottom (P) of a filter pocket (T);
- the folded filter material sheet (A) is folded alternately in opposite directions so that the generated folds (L) form a zigzag shape, wherein said opposite directions are perpendicular to said first direction;
- the opposite folds (L) outside the pocket (T) are joined to each other tightly by a seaming method so that the formed seams (S) are exposed on the front surface of the finished filter, wherein said front surface is at the opposite side of the bottom (P);
- the lateral ends of the folded filter material sheet are seamed, thus forming a substantially uniform, twisty filter pocket (T).

5. The filter according to claim 4, **characterized in that** the seams have been formed by at least one of the following methods: glueing, taping, sewing, stapling, battening, hot sealing.

6. The filter according to claim 4 or 5, **characterized in that** the filter material is provided with porous support layers and an adsorbent material therebetween.

7. The filter according to claim 6, **characterized in that** the support layer of the filter material is a layer formed of fibres, such as a fibre gauze.

8. The filter according to claim 6 or 7, **characterized in that** the adsorbent material of the filter material is activated carbon.

## Patentansprüche

1. Verfahren zur Herstellung eines Filters insbesondere zur Verwendung für flüssige oder gasförmige Medien, wobei der Filter durch Falten eines Filtermaterialblatts (A) in zwei Richtungen, die im Wesentlichen rechtwinklig zueinander verlaufen, hergestellt wird, umfassend die Schritte:
- Falten des Filtermaterialblatts (A) in eine erste Richtung zur Ausbildung des Bodens (P) einer Filtertasche (T);
- Falten des gefalteten Filtermaterialblatts (A) abwechselnd in entgegengesetzte Richtungen, so dass die ausgebildeten Falten (L) eine Zickzackform bilden, wobei die entgegengesetzten Richtungen rechtwinklig zu der ersten Richtung verlaufen;
- Festes Verbinden der gegenüberliegenden Falten (L) außerhalb der Tasche (T) des ausgebildeten zickzackförmigen Filtermaterialblatts (A) durch ein Fügeverfahren, so dass die ausgebildeten Verbindungsfugen (S) auf der Oberseite des fertig gestellten Filters angeordnet sind, wobei die Oberseite die dem Boden (P) gegenüberliegende Seite ist;
- Zusammenfügen der seitlichen Enden des gefalteten Filtermaterialblatts, so dass eine im Wesentlichen einheitlich gefaltete Filtertasche (T) ausgebildet wird.

2. Verfahren nach Anspruch 1,
**dadurch gekennzeichnet,**
**dass** das Zusammenfügen durch zumindest eines der folgenden Methoden durchgeführt wird: Verkleben mittels Klebstoff, Umwickeln mittels Klebeband, Vernähen, Klammern, Binden, Heißversiegeln.

3. Verfahren nach Anspruch 1,
**dadurch gekennzeichnet,**
**dass** das Fügematerial (R1, R2) vor dem Falten auf das Filtermaterial aufgebracht wird.

4. Filter für flüssige oder gasförmige Medien, der durch Falten eines Filtermaterials in zwei Richtungen, die im Wesentlichen rechtwinklig zueinander verlaufen, ausgebildet wird, derart, dass
- das Filtermaterialblatt (A) in eine erste Richtung zur Ausbildung des Bodens (P) einer Filtertasche (T) gefaltet wird;
- das gefaltete Filtermaterialblatt (A) abwechselnd in entgegengesetzte Richtungen gefaltet wird, so dass die ausgebildeten Falten (L) eine Zickzackform bilden, wobei die entgegengesetzten Richtungen rechtwinklig zu der ersten Richtung verlaufen;
- die gegenüberliegenden Falten (L) außerhalb der Tasche (T) durch ein Fügeverfahren fest miteinander verbunden werden, so dass die ausgebildeten Verbindungsfugen (S) auf der Oberseite des fertig gestellten Filters angeordnet sind, wobei die Oberseite die dem Boden (P) gegenüberliegende Seite ist;
- die seitlichen Enden des gefalteten Filtermaterialblatts zusammengefügt werden, so dass eine im Wesentlichen einheitlich gefaltete Filtertasche (T) ausgebildet wird.

5. Filter nach Anspruch 4,
**dadurch gekennzeichnet,**
**dass** die Verbindungsfugen durch zumindest eine der folgenden Methoden ausgebildet werden: Verkleben mittels Klebstoff, Umwickeln mittels Klebeband, Vernähen, Klammern, Binden, Heißversiegeln.

6. Filter nach Anspruch 4 oder 5,
**dadurch gekennzeichnet,**
**dass** das Filtermaterial offenporige Trägerschichten und ein zwischenliegendes Adsorptionsmaterial aufweist.

7. Filter nach Anspruch 6,
**dadurch gekennzeichnet,**
**dass** es sich bei der Trägerschicht des Filtermaterials um eine aus Fasern ausgebildete Schicht, beispielsweise Fasergewebe, handelt.

8. Filter nach Anspruch 6 oder 7,
**dadurch gekennzeichnet,**
**dass** es sich bei dem Adsorptionsmaterial des Filtermaterials um Aktivkohle handelt.

## Revendications

1. Procédé de fabrication d'un filtre à utiliser particulièrement pour des milieux liquides ou gazeux, lequel filtre est produit par pliage d'une feuille de matériau filtre (A) dans deux directions qui sont sensiblement perpendiculaires l'une à l'autre, comprenant les étapes de :
- pliage de la feuille de matériau filtre (A) dans une première direction pour constituer le fond (P) d'une poche filtre (T) ;
- pliage de la feuille de matériau filtre pliée (A) alternativement dans des directions opposées de façon que les plis (L) générés forment un zigzag, où lesdites directions opposées sont perpendiculaires à ladite première direction ;
- réunion étroite les uns aux autres des plis (L) opposés à l'extérieur de la poche (T) de la feuille de matériau filtre (A) par un procédé de jointure de façon que les joints (S) formés soient exposés sur la surface frontale du filtre fini, où ladite surface frontale se trouve sur le côté opposé au fond (P) ;
- jointure des extrémités latérales de la feuille de matériau filtre pliée, formant ainsi une poche filtre (T) torsadée, sensiblement uniforme.

2. Procédé selon la revendication 1, **caractérisé en ce que** la jointure est réalisée par au moins un des procédés suivants : collage, rubanage, couture, agrafage, voligeage, thermoscellement.

3. Procédé selon la revendication 1, **caractérisé en ce que** le matériau de jointure (R1, R2) est placé dans le matériau filtre avant le pliage.

4. Filtre pour milieux liquides ou gazeux, lequel est formé par pliage d'un matériau filtre dans des directions qui sont sensiblement perpendiculaires l'une à l'autre de façon telle que :
- la feuille de matériau filtre (A) est pliée dans une première direction pour constituer le fond (P) d'une poche filtre (T) ;
- la feuille de matériau filtre pliée (A) est pliée alternativement dans des directions opposées de façon que les plis (L) générés forment un zigzag, où lesdites directions opposées sont perpendiculaires à ladite première direction ;
- les plis (L) opposés à l'extérieur de la poche (T) sont réunis l'un à l'autre étroitement par un procédé de jointure de façon que les jointures (S) formées soient exposées sur la surface frontale du filtre fini, où ladite surface frontale est du côté opposé au fond (P) ;
- les extrémités latérales de la feuille de matériau filtre pliée sont jointes, formant ainsi une poche filtre torsadée, sensiblement uniforme (T).

5. Filtre selon la revendication 4, **caractérisé en ce que** les jointures ont été formées par au moins un des procédés suivants : collage, rubanage, couture, agrafage, voligeage, thermoscellement.

6. Filtre selon la revendication 4 ou 5, **caractérisé en ce que** le matériau filtre est doté de couches supports poreuses et d'un matériau adsorbant intercalaire.

7. Filtre selon la revendication 6, **caractérisé en ce que** la couche support du matériau filtrant est une couche formée de fibres, par exemple une gaze fibreuse.

8. Filtre selon la revendication 6 ou 7, **caractérisé en ce que** le matériau adsorbant du matériau filtre est du charbon activé.
